(19)

Europäisches
Patentamt
European
Patent Office
Office européen
des brevets

(11) **EP 2 966 919 A1**

(12) **EUROPEAN PATENT APPLICATION**

(43) Date of publication:
**13.01.2016 Bulletin 2016/02**

(51) Int Cl.:
*H04W 52/38* (2009.01)

(21) Application number: **15176153.3**

(22) Date of filing: **09.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **11.07.2014 US 201462023403 P**

(71) Applicant: **Innovative Sonic Corporation
Taipei City 11491 (TW)**

(72) Inventors:
• **CHANG, Wei-Che
11491 Taipei City (TW)**
• **LI, Ming-Che
11491 Taipei City (TW)**

(74) Representative: **Hoefer & Partner Patentanwälte
mbB
Pilgersheimer Straße 20
81543 München (DE)**

(54) **METHOD AND APPARATUS FOR IMPLEMENTING DEVICE-TO-DEVICE (D2D) SERVICE POWER CONTROL IN A WIRELESS COMMUNICATION SYSTEM**

(57)     A method and apparatus are disclosed for implementing D2D service power control in a wireless communication system. The method includes the UE being served by an eNB (705). The method also includes computing a power information of a first channel transmission based on a power information of a first channel transmission included in a previous subframe and a first power offset associated with the first channel transmission (710). The method further includes transmitting a second channel transmission in subframe n where the power information of the second channel transmission is computed based on a power information of the first channel transmission in subframe $n$-1 and a second power offset associated with the second channel transmission (715).

FIG. 7

**Description**

## CROSS-REFERENCE TO RELATED APPLICATIONS

The present Application claims the benefit of U.S. Provisional Patent Application Serial No. 62/023,403 filed on July 11, 2014, the entire disclosure of which is incorporated herein by reference.

## FIELD

This disclosure generally relates to wireless communication networks, and more particularly, to a method and apparatus for implementing D2D service power control in a wireless communication system.

## BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

## SUMMARY

A method and apparatus are disclosed for implementing D2D service power control in a wireless communication system and are defined in independent claims 1 and 11, respectively. The respective dependent claims define preferred embodiments thereof, respectively. The method includes the UE being served by an eNB (evolved Node B). The method also includes computing a power information of a first channel transmission based on a power information of a first channel transmission included in a previous subframe and a first power offset associated with the first channel transmission. The method further includes transmitting a second channel transmission in subframe $n$ where the power information of the second channel transmission is computed based on a power information of the first channel transmission in subframe $n$-1 and a second power offset associated with the second channel transmission.

## BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a reproduction of Figure 1 of 3GPP R1-141301.

FIG. 6 is a reproduction of Figure 1 of 3GPP R1-142339.

FIG. 7 is a flow chart according to one exemplary embodiment.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including the RAN1#76b Chairman's Notes; the RAN1#77 Chairman's Notes; TS 36.213 V11.2.0, "Physical layer procedures"; R1-142454, "WAN protection by configurable D2D transmission power control", NSN, Nokia; R1-141928, "Power control for D2D signals", Huawei; R1-141301, "Discussion on guard period in D2D PUSCH", Samsung; R1-142339, "Evaluation of D2D and cellular coexistence", Huawei; TS 36.212 V11.2.0, "Multiplexing and channel coding"; TS 36.211 V11.2.0, "Physical Channels and Modulation"; TS 36.321 V11.2.0, "Medium Access Control (MAC) protocol specification". The standards and documents listed above are hereby expressly incorporated by reference in their entirety.

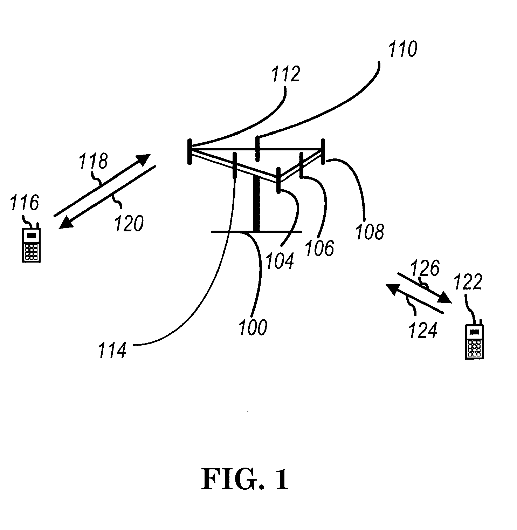

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

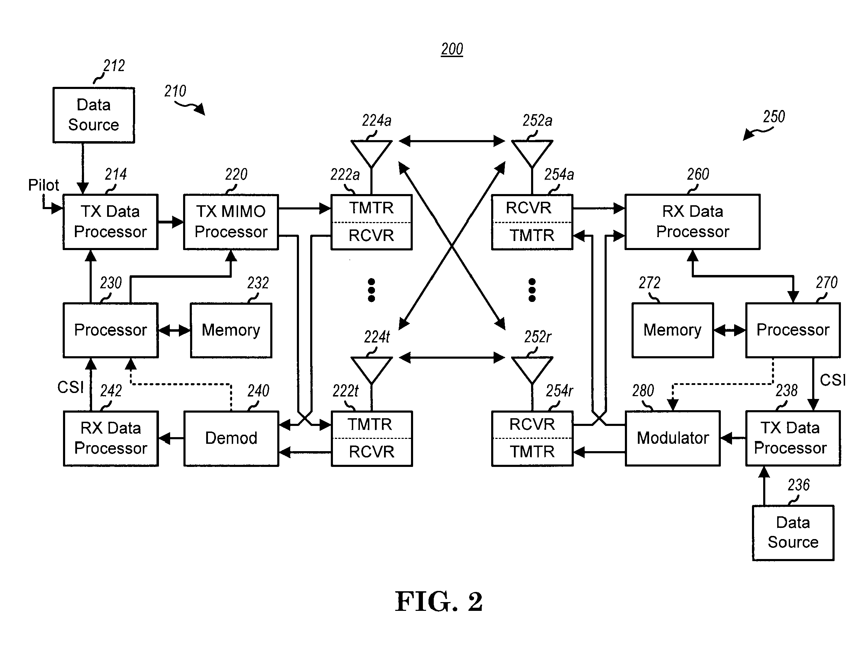

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

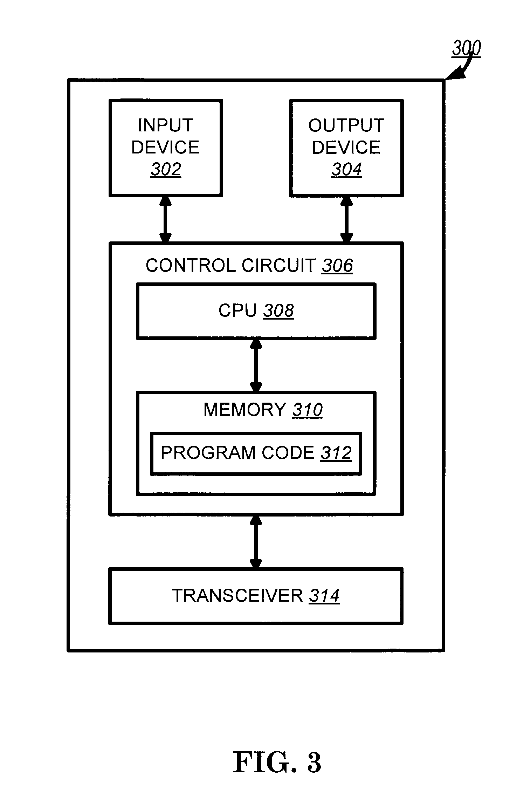

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

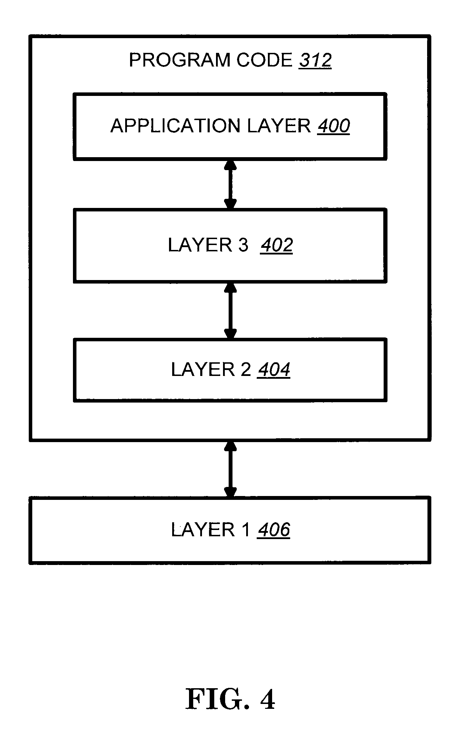

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

Agreements were made in RAN1#76b meeting that the transmission power of SA (Scheduling Assignment) and data would control by eNB or relay in D2D mode 1 communication. The RAN1#76b Chairman's Notes discuss such agreements as follows:

**Agreements:**

- For Mode 1 transmission,

  - eNodeB or Rel-10 relay allocates resources to a D2D transmitter for SA and Data using PDCCH or EPDCCH

    - FFS: Linkage between SA and Data

    - FFS: Separate grant for Data

    - Single grant can schedule multiple Data transmission opportunities

      - The multiple opportunities can be used for the multiple transmissions of a single TB

      - The multiple opportunities can be used for the transmissions of multiple TBs

      - FFS: Which entity decides how each transmission opportunity is used

    - FFS: Single grant can schedule single SA transmission

- Single grant can schedule multiple SA transmissions

    - FFS: Whether the multiple SA transmissions are of the same SA or different SA

- FFS: C-RNTI or another UE-specific RNTI is used at least for scrambling of CRC of a D2D grant

- eNodeB or Rel-10 relay controls transmission power of SA and Data using PDCCH or EPDCCH

Furthermore, agreements were made in the RAN1#77 meeting that the baseline of D2D power control may be based on current PUSCH (Physical Uplink Share Channel) power control in D2D mode 1 communication. The RAN1#77 Chairman's Notes discuss such agreements as follows:

**Agreements:**

- For communication Mode 1, the current PUSCH UL PC is baseline

    - Values of P0 and alpha for Mode 1 D2D communication are configured by eNB.

        - P0 and alpha for D2D can be different from P0 and alpha for WAN

    - eNB-UE path loss is used not UE-UE path loss.

    - X bits TPC command is conveyed in D2D grant.

        - FFS: X bits (X > 0)

    - FFS whether power control parameters are the same between SA and data

    - FFS whether accumulate PC or absolute PC

    - FFS boosting range is different from cellular

    - Maximum power transmission is not precluded

In addition, the PUSCH power control, PUCCH (Physical Uplink Control Channel) power control and the corresponding TPC (Transmit Power Control) command tables are discussed in 3GPP TS 36.213 V11.2.0 as follows:

**5.1.1 Physical uplink shared channel**

**5.1.1.1 UE behaviour**

The setting of the UE Transmit power for a physical uplink shared channel (PUSCH) transmission is defined as follows.

If the UE transmits PUSCH without a simultaneous PUCCH for the serving cell c, then the UE transmit power $P_{\text{PUSCH},c}(i)$ for PUSCH transmission in subframe $i$ for the serving cell c is given by

$$P_{\text{PUSCH,c}}(i) = \min \left\{ \begin{array}{l} P_{\text{CMAX},c}(i), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{array} \right\} \text{ [dBm]}$$

where,

- $P_{\text{CMAX},c}(i)$ is the configured UE transmit power defined in [6] in subframe $i$ for serving cell $c$ and $\hat{P}_{\text{CMAX},c}(i)$ is the linear value of $P_{\text{CMAX},c}(i)$.
- $M_{\text{PUSCH},c}(i)$ is the bandwidth of the PUSCH resource assignment expressed in number of resource blocks valid for subframe *i* and serving cell c.

• $P_{O\_PUSCH,c}(j)$ is a parameter composed of the sum of a component $P_{O\_NOMINAL\_PUSCH,c}(j)$ provided from higher layers for *j=0* and *1* and a component $P_{O\_UE\_PUSCH,c}(j)$ provided by higher layers for *j=0* and *1* for serving cell c.

• $PL_c$ is the downlink pathloss estimate calculated in the UE for serving cell *c* in dB and $PL_c$ = *referenceSignalPower*-higher layer filtered RSRP, where *referenceSignalPower* is provided by higher layers and RSRP is defined in [5] for the reference serving cell and the higher layer filter configuration is defined in [11] for the reference serving cell.

• $\Delta_{TF,c}(i) = 10\log_{10}\left(\left(2^{BPRE \cdot K_s} - 1\right) \cdot \beta_{offset}^{PUSCH}\right)$ for $K_s$ = 1.25 and 0 for $K_S$ = 0 where $K_S$ is given by the parameter *deltaMCS-Enabled* provided by higher layers for each serving cell c.

• $\delta_{PUSCH,c}$ is a correction value, also referred to as a TPC command and is included in PDCCH/EPDCCH with DCI format 0/4for serving cell *c* or jointly coded with other TPC commands in PDCCH with DCI format 3/3A whose CRC parity bits are scrambled with TPC-PUSCH-RNTI.

○ $f_c(i) = f_c(i\text{-}1) + \delta_{PUSCH,c}(i\text{-}K_{PUSCH})$ if accumulation is enabled based on the parameter *Accumulation-enabled* provided by higher layers or if the TPC command $\delta_{PUSCH,c}$ is included in a PDCCH/EPDCCH with DCI format 0 for serving cell cwhere the CRC is scrambled by the Temporary C-RNTI

■ where $\delta_{PUSCH,c}(i\text{-}K_{PUSCH})$ was signalled on PDCCH/EPDCCH with DCI format 0/4 or PDCCH with DCI format 3/3A on subframe $i\text{-}K_{PUSCH}$, and where $f_c(0)$ is the first value after reset of accumulation.
■ The value of $K_{PUSCH}$ is

• For FDD, $K_{PUSCH}$ = 4

o $f_c(i) = \delta_{PUSCH,c}(i\text{-}K_{PUSCH})$ if accumulation is not enabled for serving cell *c* based on the parameter *Accumulation-enabled* provided by higher layers

■ where $\delta_{PUSCH,c}(i\text{-}K_{PUSCH})$ was signalled on PDCCH/EPDCCH with DCI format 0/4for serving cell con subframe $i\text{-}K_{PUSCH}$

■ The value of $K_{PUSCH}$ is

• For FDD, $K_{PUSCH}$ = 4

**Table 5.1.1.1-2: Mapping of TPC Command Field in DCI format 0/3/4 to absolute and accumulated $\delta_{\textbf{PUSCH,c}}$ values.**

| TPC Command Field in DCI format 0/3/4 | Accumulated $\delta_{\text{PUSCH,c}}$ [dB] | Absolute $\delta_{\text{PUSCH,c}}$ [dB] only DCI format 0/4 |
|:---:|:---:|:---:|
| 0 | -1 | -4 |
| 1 | 0 | -1 |
| 2 | 1 | 1 |
| 3 | 3 | 4 |

**5.1.2 Physical uplink control channel**

**5.1.2.1 UE behaviour**

If serving cell c is the primary cell, the setting of the UE Transmit power $P_{PUCCH}$ for the physical uplink control channel (PUCCH) transmission in subframe *i*is defined by

$$P_{\text{PUCCH}}(i) = \min\begin{cases} P_{\text{CMAX,c}}(i), \\ P_{0\_\text{PUCCH}} + PL_c + h(n_{CQI}, n_{HARQ}, n_{SR}) + \Delta_{\text{F\_PUCCH}}(F) + \Delta_{TxD}(F') + g(i) \end{cases} \text{[dBm]}$$

where,

- $P_{CMAX,c}(i)$ is the configured UE transmit power defined in [6] in subframe i for serving cell c. If the UE transmits PUSCH without PUCCH in subframe *i* for the serving cell c, for the accumulation of TPC command received with DCI format 3/3A for PUCCH, the UE shall assume $P_{CMAX,c}(i)$ as given by section 5.1.1.1. If the UE does not transmit PUCCH and PUSCH in subframe *i* for the serving cell c, for the accumulation of TPC command received with DCI format 3/3A for PUCCH, the UE shall compute $P_{CMAX,c}(i)$ assuming MPR=0dB, A-MPR=0dB, P-MPR=0dB and $\Delta T_c$ =0dB, where MPR, A-MPR, P-MPR and $\Delta T_c$ are defined in [6].

- The parameter $\Delta_{F\_PUCCH}(F)$ is provided by higher layers. Each $\Delta_{F\_PUCCH}(F)$ value corresponds to aPUCCH format (*F*) relative to PUCCH format 1a, where each PUCCH format (*F*) is defined in Table 5.4-1 of [3].

- $h(n_{CQI},n_{HARQ},n_{SR})$ is a PUCCH format dependent value, where $n_{CQI}$ corresponds to the number of information bits for the channel quality information defined in section 5.2.3.3 in [4]. $n_{SR} = 1$ if subframe *i* is configured for SR for the UE not having any associated transport block for UL-SCH, otherwise $n_{SR} =0$. If the UE is configured with more than one serving cell, or the UE is configured with one serving cell and transmitting using PUCCH format 3, the value of $n_{HARQ}$ is defined in section 10.1; otherwise, $n_{HARQ}$ is the number of HARQ-ACK bits sent in subframe *i*.

- $P_{O\_PUCCH}$ is a parameter composed of the sum of a parameter $P_{O\_NOMINAL\_PUCCH}$ provided by higher layers and a parameter $P_{O\_UE\_PUCCH}$ provided by higher layers.

- $\delta_{PUCCH}$ is a UE specific correction value, also referred to as a TPC command, included in a PDCCH with DCI format 1A/1B/1D/1/2A/2/2B/2C/2Dfor the primary cell, or included in an EPDCCH with DCI format 1A/1B/1D/1/2A/2/2B/2C/2D for the primary cell,or sent jointly coded with other UE specific PUCCH correction values on a PDCCH with DCI format 3/3A whose CRC parity bits are scrambled with TPC-PUCCH-RNTI.

  o $g(i) = g(i-1) + \sum_{m=0}^{M-1} \delta_{PUCCH}(i - k_m)$ where $g(i)$ is the current PUCCH power control adjustment state and where $g(0)$ is the first value after reset.

    ▪ For FDD, $M = 1$ and $k_0 = 4$.

**Table 5.1.2.1-1: Mapping of TPC Command Field in DCI format 1A/1B/1D/1/2A/2B/2C/2D/2/3 to $\delta_{PUCCH}$ values.**

| TPC Command Field in DCI format 1A/1B/1D/1/2A/2B/2C/2D/2/3 | $\delta_{PUCCH}$ [dB] |
|---|---|
| 0 | -1 |
| 1 | 0 |
| 2 | 1 |
| 3 | 3 |

Also, 3GPP R1-142454 describes that network should provide with configured tools to protect the cellular traffic over D2D operation as follows:

**2 Discussion**

Hence, it is clear that D2D PUSCH causes interference to cellular traffic due to mismatch on CP lengths and transmission timings as well as due to in-band emissions [2] when D2D and cellular uplink traffic, like PUCCH, are FDMed, as discussed in several contributions [3]-[8]. In some scenarios, the interference is tolerable, or D2D operation is prioritized so that penalties on cellular traffic can be accepted. However, in some scenarios, D2D interference to cellular uplink can be considerable while it is preferred to protect cellular traffic and penalize D2D operation. Due to the variety as well as uncertainty of real life conditions for D2D operation, it is reasonable to provide network with sufficient tools, or mechanisms, to protect cellular traffic from D2D interference and which can be configured according to the actual needs.

**Observation #2: *Network should be provided with configurable tools to protect cellular traffic over D2D operation, if so preferred in the use case.***

On other hand, power control applied on in-coverage D2D transmissions can effectively mitigate the interference caused to cellular uplink, although at a price of significant impact on D2D transmission coverage. However, each of D2D communication modes and discovery types can have quite different priorities. Hence, it is important to leave the application of power control to be separately configurable for D2D communication mode 2 as well as for both discovery types, to allow for network to properly prioritise between cellular traffic and different D2D transmission types. Equally, power control parameters should also be separately configurable for each of D2D communication modes and discovery types.

A simplified form of the current LTE PUSCH power control formula,

$$P_{\text{D2D}}(i) = \min\left\{\begin{array}{l} P_{\text{CMAX,D2D}}(i), \\ 10\log_{10}(M_{\text{D2D}}(i)) + P_{\text{O\_D2D}} + \alpha_{D2D} \cdot PL + f_{D2D}(i) \end{array}\right\} \text{ [dBm]},$$

**Proposal #2: *Deploy a common D2D power control framework similar to PUSCH TPC for both D2D communication modes in case of in-coverage situations as well as for both discovery types, where***

- ***The eNB can configure the power control parameters Po and alpha separately for both D2D communication modes as well as for both discovery types***
- ***The closed loop power control adjustment $f_{D2D}(i)$ is only valid for D2D communication mode 1 and is set to 0 for D2D communication mode 2 for in-coverage situations as well as for both discovery types.***

Furthermore, 3GPP R1-142454 states that the power control mechanism should solve the in-band emission and the interference to WAN (Wide Area Network), especially to PUCCH, as follows:

## 2. D2D power control schemes

### 2.1 Maximum Tx power and pathloss based Tx power

To maximize the D2D discovery/communication range, the maximum transmission power should be used for the D2D discovery/communication signals. However, D2D transmissions impact PUCCH and PUSCH reception at the eNodeB. To protect the cellular system, the transmission power of D2D discovery/communication signals should be controlled based on the pathloss between the eNodeB and the UE, similar to the power control for PUCCH and PUSCH. On the other hand, the transmission of PUCCH and PUSCH also impacts the reception of D2D signals. It is network implementation to protect the cellular system or to guarantee the D2D range. Both the maximum Tx power and the pathloss based Tx power should be supported by D2D devices.

***Proposal 1: Power control is used for D2D discovery/communication signals***

***Proposal 2: eNodeB indicates the D2D UE to transmit the D2D signals using the pathloss based power control or the maximum transmission power.***

### 2.2 PRB specific power control

The ICI/ISI caused by the FDM of normal CP OFDM symbols and extended CP OFDM symbols brings power leakage from the scheduled PRBs to the neighboring PRBs. The interference power level depends on the distance of the scheduled PRBs and the interfered PRBs [2]. To ensure the same interference power level to the PUCCH, the D2D signals transmitted using the PRBs far away from the PRBs used by the PUCCH can have higher Tx power than the D2D signals transmitted using the PRBs near to the PUCCH PRBs.

Besides the ICI/ISI, we have the same observation on UE's in-band emission. In Fig. 1, two different in-band emissions using two different Tx powers are shown. To keep the interference level at the same/similar level, the D2D signals using PRB#3 and PRB#4 will have to use more than 10dB less power than the D2D signals using PRB#11 and PRB#12. If we use the same open loop power control for all the PRBs reserved for D2D signals, the Tx power will be highly suppressed. We can also use some PRBs as the gap between PUCCH PRBs and D2D PRBs. In Fig. 1, if we reserve 12 PRBs as the gap, it represents 12/32=27% D2D resource loss.

To protect the PUCCH is needed to protect the cellular traffic. Mode-1 communication signal and type-2 discovery signal, which are be scheduled by the eNodeB, can be dynamically power controlled by the eNodeB. Mode-2 communication and type-1 discovery may not in RRC_connected state which cannot adjust its transmission power adaptively.

One solution to address this problem is to use different power control for different PRBs. For open loop power

control, the $P_0$ can be set to smaller values for the PRBs which are near to the PUCCH resources than the PRBs which are far away from the PUCCH resources. Using this way, all PRBs except the PUCCH resources can be used for D2D signals while the D2D range can be enlarged.

In addition, 3GPP R1-141301 discusses some time domain collision issue since the TDM (Time Division Multiplexing) between D2D and WAN resources is a possible resource deployment as follows:

## 2 Discussion on Guard Period

### 2.1 Size of the gap

As shown in Table 1, a time domain conflict between D2D and WAN UL transmission mainly comes from the fact that D2D and WAN use different transmit reference timings, i.e., DL reference timing for D2D transmission and UL reference timing for WAN UL transmission. This conflict will be more serious as the cell size gets larger due to longer propagation delay, and thus the size of the gap should be increased to fully avoid the conflict. However, using too many symbols as a gap is not a good idea because it causes severe D2D resource waste as mentioned in [2]. So, it would be desirable to have a limited size of the gap regardless of cell size for efficient D2D resource utilization as well as ISI avoidance.

**Observation 1:** *It would be desirable to have α limited size of the gap regardless of cell size for efficient D2D resource utilization as well as ISI avoidance.*

ISI problems shown in Figure 1 as well as RX-to-TX switching time can be handled by an eNB scheduling or UE implementation. For example, D2D transmitters in RRC_Idle state yield D2D transmission in the (n-1)th D2D subframe if their transmission would be the potential impairment to WAN. For RRC_Connected UEs, the eNB can fully control their transmission in the way that the eNB restricts D2D transmission of the RRC_Connected UEs with large TA in the (n-1)th D2D subframe or the eNB does not assign the WAN resources to the UEs with large TA in the nth WAN subframe.

**Observation 2:** *If we introduce eNB scheduling or UE implementation-based approach, a time conflict between D2D and WAN subframes can be resolved with less size of the gap.*

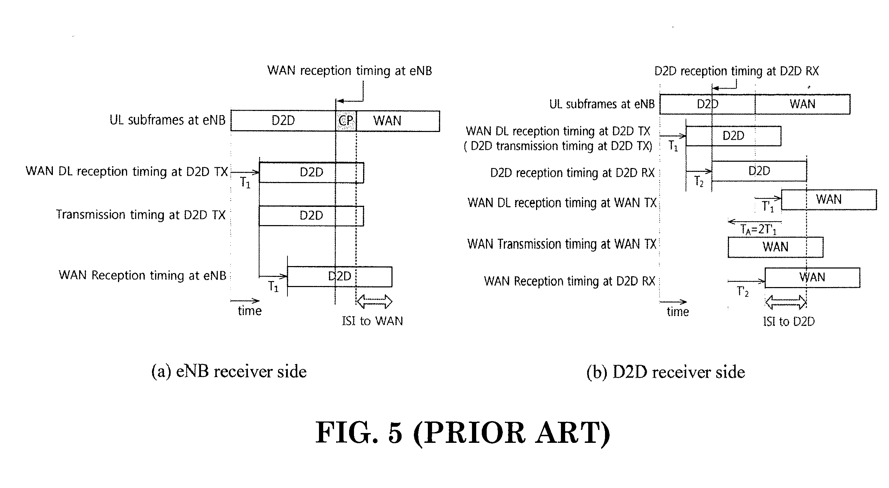

**[Figure 1 of 3GPP R1-141301 has been reproduced as FIG. 5 of the present application]**

Also, 3GPP R1-142339 discusses the possible scenario of FDM resource scheduling between D2D and WAN resources as follows:

### Simulation assumptions

The simulation assumptions are aligned with the agreed assumptions in 3GPP and are given in the Appendix. TDM/FDM multiplexing of D2D and UL signals is evaluated as shown in Figure 1.

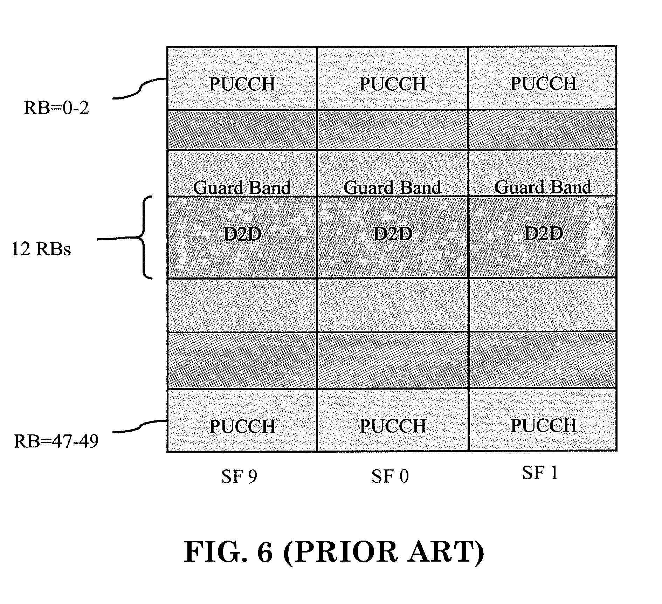

**[Figure 1 of 3GPP R1-142339 has been reproduced as FIG. 6 of the present application]**

6 RBs are reserved for PUCCH transmissions. For UL throughput analysis, 25% of subframes, occupying 12 RBs, contain D2D transmissions. D2D and cellular transmissions are orthogonal. To evaluate the impact of D2D in-band emission on PUCCH, it is assumed no PUSCH is scheduled, and only the 12 middle RBs are used for D2D transmissions, with each D2D UE using at most 4 consecutive RBs.

Based on the agreement of RAN1#77 meeting, the discussion about power control in communication is separate for mode 1 and mode 2. Since the D2D communication is based on PUSCH structure, the power control mechanism of D2D takes the PUSCH power control as the baseline. In mode 2 communication, the discussions are focused on open loop power control since the mode 2 communication may not need the eNB control. However, in mode 1 D2D communication, the close loop power control could be considered since all the communication is based on eNB scheduling.

One of the intentions of power control in D2D communication is about the WAN protection. Since the D2D resource may be frequency divided with PUCCH resources, the interference from D2D should be controlled to avoid failure of PUCCH transmission. In order to ensure the PUCCH transmission successful rate, a solution is to keep the D2D power always lower than PUCCH. Thus, there are several options from companies to solve this issue. Some companies mention that using different power in different D2D PRBs (Physical Resource Block) to control the power of D2D transmission. Moreover, the TPC (Transmit Power Control) value in the power control formula may also help the eNB to realize the D2D interference mitigation.

In the RAN1#77 meeting agreement, there is still FFS (For Further Study) about whether using absolute or accumulated way of TPC calculation in mode 1 communication. Some companies mention that based on the difference of $P_0$ and the alpha value for a UE between WAN and D2D configured by eNB, the value of $P_0$ and alpha value in D2D may be lower than the value in WAN for the purpose of WAN protection. Thus, in the beginning of the D2D communication (from PUSCH resources changes to D2D resources) in subframe $i$, $P_0$ and the alpha value would change to the D2D value; and the D2D power control adjustment state, $f_{D2D}(i)$, would base on the TPC value signaled on associated DCI for D2D which is received in subframe $i$-$K_{D2D}$.

For one embodiment, $K_{D2D}$ is the same as $K_{PUSCH}$ as specified in section 5.1.1.1 of 3GPP TS 36.213 V11.2.20. In absolute TPC calculation, the D2D power control adjustment state would directly take the absolute TPC value based on the pre-defined D2D TPC table, and would not need to consider the TPC value before subframe $i$-$K_{D2D}$ as in following formula:

$$P_{\text{D2D}}(i) = \min\left\{ \begin{array}{l} P_{\text{CMAX,D2D}}(i), \\ 10\log_{10}(M_{\text{D2D}}(i)) + P_{\text{O\_D2D}} + \alpha_{D2D} \cdot PL + f_{D2D}(i) \end{array} \right\} \text{ [dBm]}$$

  ◦ $f_{D2D}(i) = \delta_{\text{D2D}}(i\text{-}K_{D2D})$

However, since P0 and the alpha value would have already changed in the D2D communication, the absolute TPC value would need to be re-designed (or re-defined) to avoid the D2D cell range rapidly decreased due to power decreasing and to improve the resolution (by increasing the number of bits). Thus, in order to prevent re-defined the value of TPC, the accumulated TPC calculation could possibly be used in D2D communication.

In legacy LTE, the accumulative TPC method could be applied on PUCCH and/or PUSCH. In general, the accumulative TPC method is that the power control adjustment state in sub frame $i$ is based on the adjustment state in subframe $i$-1 and the associated TPC value(s) as seen in following formulas:

$$P_{\text{PUSCH,c}}(i) = \min\left\{ \begin{array}{l} P_{\text{CMAX,c}}(i), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{array} \right\} \text{ [dBm]}$$

  ◦ $f_c(i) = f_c(i\text{-}1) + \delta_{\text{PUSCH,c}}(i\text{-}K_{PUSCH})$ if accumulation is enabled based on the parameter *Accumulation-enabled* provided by higher layers or if the TPC command $\delta_{\text{PUSCH,c}}$ is included in a PDCCH/EPDCCH with DCI format 0 for serving cell c where the CRC is scrambled by the Temporary C-RNTI

$$P_{\text{PUCCH}}(i) = \min\left\{ \begin{array}{l} P_{\text{CMAX,c}}(i), \\ P_{\text{0\_PUCCH}} + PL_c + h(n_{CQI}, n_{HARQ}, n_{SR}) + \Delta_{\text{F\_PUCCH}}(F) + \Delta_{TxD}(F') + g(i) \end{array} \right\} \text{ [dBm]}$$

  o $g(i) = g(i\text{-}1) + \sum_{m=0}^{M-1} \delta_{PUCCH}(i - k_m)$ where g(i) is the current PUCCH power control adjustment state and where $g(0)$ is the first value after reset.

To apply accumulative TPC method in the D2D communication scenario, the D2D power control adjustment state in subframe i could include the power control adjustment state in subframe $i$-1 and the associated TPC value for D2D in subframe $i$-$K_{D2D}$ as shown in the following formula:

$$P_{\text{D2D}}(i) = \min\left\{ \begin{array}{l} P_{\text{CMAX,D2D}}(i), \\ 10\log_{10}(M_{\text{D2D}}(i)) + P_{\text{O\_D2D}} + \alpha_{D2D} \cdot PL + f_{D2D}(i) \end{array} \right\} \text{ [dBm]},$$

$$f_{D2D}(i) = f_{D2D}(i-1) + \delta_{\text{D2D}}(i - K_{D2D})$$

There may need to be some consideration about how to decide the power control adjustment state in subframe *i* -1 if the beginning of D2D communication happens in subframe *i*. The resource of D2D may locate in the LTE UL band and the time division with PUSCH. In the scenario where subframe *i* is the start of D2D transmission resource following the end of PUSCH resource with subframe *i*-1, the power control adjustment state of subframe *i*-1, $f_{D2D}(i$-1$)$, could adopt the D2D power control adjustment state in the previous D2D period of D2D transmission since the subframe *i* is the start of new D2D transmission. However, such D2D power control adjustment state may not reflect the actual power variation situation of the time region from previous D2D period of D2D transmission to subframe *i*-1. Thus, the power control adjustment state in subframe *i*-1 of PUSCH could be applied in the D2D TPC calculation to trace the power variation of the time region as shown in the following description:

$$f_{D2D}(i) = f_{PUSCH}(i-1) + \delta_{D2D}(i - K_{D2D})$$

Moreover, in order to prevent interference to the PUCCH, the power control adjustment state in subframe *i*-1 of PUCCH could be applied in the D2D TPC calculation as show in the following description:

$$f_{D2D}(i) = g_{PUCCH}(i-1) + \delta_{D2D}(i - K_{D2D})$$

This method could ensure to reflect the actual power variation situation of the time region to subframe *i*-1 and also ensure the PUCCH transmission. The following table shows the possible options of TPC calculation if the beginning of D2D communication happens in subframe *i*:

| Accumulation is not enable (Absolute term) | $f_{D2D}(i) = \delta_{D2D}(i\text{-}K_{D2D})$, $$P_{\mathrm{D2D}}(i) = \min\begin{cases} P_{\mathrm{CMAX,D2D}}(i), \\ 10\log_{10}(M_{\mathrm{D2D}}(i)) + P_{\mathrm{O\_D2D}} + \alpha_{D2D} \cdot PL + f_{D2D}(i) \end{cases}$$ | The TPC value may need to be re-designed with large values and large resolution. |
| --- | --- | --- |
| Accumulation is enabled | $f_{D2D}(i) = f_{D2D}(i\text{-}1) + \delta_{D2D}(i\text{-}K_{D2D})$, $f_{D2D}(i\text{-}1)$ using the D2D power control adjustment state from previous D2D period $$P_{\mathrm{D2D}}(i) = \min\begin{cases} P_{\mathrm{CMAX,D2D}}(i), \\ 10\log_{10}(M_{\mathrm{D2D}}(i)) + P_{\mathrm{O\_D2D}} + \alpha_{D2D} \cdot PL + f_{D2D}(i) \end{cases}$$ | The previous D2D power control adjustment state may not reflect the actual power variation since the $f_{D2D}(i\text{-}1)$ may be in different D2D periods (e.g., PUSCH resources may be scheduled between two D2D transmission periods with TDM) |
| Accumulation is enabled | $f_{D2D}(i) = f_{D2D}(i\text{-}1) + \delta_{D2D}(i\text{-}K_{D2D})$, $f_{D2D}(i\text{-}1) = f_{PUSCH}(i\text{-}1)$ at the beginning of D2D transmission, $$P_{\mathrm{D2D}}(i) = \min\begin{cases} P_{\mathrm{CMAX,D2D}}(i), \\ 10\log_{10}(M_{\mathrm{D2D}}(i)) + P_{\mathrm{O\_D2D}} + \alpha_{D2D} \cdot PL + f_{D2D}(i) \end{cases}$$ | Guarantee to reflect the actual power variation. |

(continued)

| Accumulation is enabled | $f_{D2D}(i) = f_{D2D}(i\text{-}1) + \delta_{\text{D2D}}(i\text{-}K_{D2D})$, $f_{D2D}(i\text{-}1) = g_{PUCCH}(i\text{-}1)$ at the beginning of D2D transmission, $$P_{\text{D2D}}(i) = \min\begin{cases} P_{\text{CMAX,D2D}}(i), \\ 10\log_{10}(M_{\text{D2D}}(i)) + P_{\text{O\_D2D}} + \alpha_{D2D} \cdot PL + f_{D2D}(i) \end{cases}$$ | Reflects the actual power variation and ensure the PUCCH transmission |
| --- | --- | --- |

Moreover, after deciding the power control adjustment state of the beginning of D2D transmission in subframe $i$, there are at least two alternatives for determining the power of the following D2D transmissions that are within the same D2D period as the beginning of D2D transmission. The first alternative is that the D2D power control adjustment state of following D2D transmission includes the D2D power control adjustment state in previous subframe. Another alternative is that the D2D power control adjustment state of following D2D transmission includes the PUCCH power control adjustment state in previous subframe which is in frequency division with the D2D transmission.

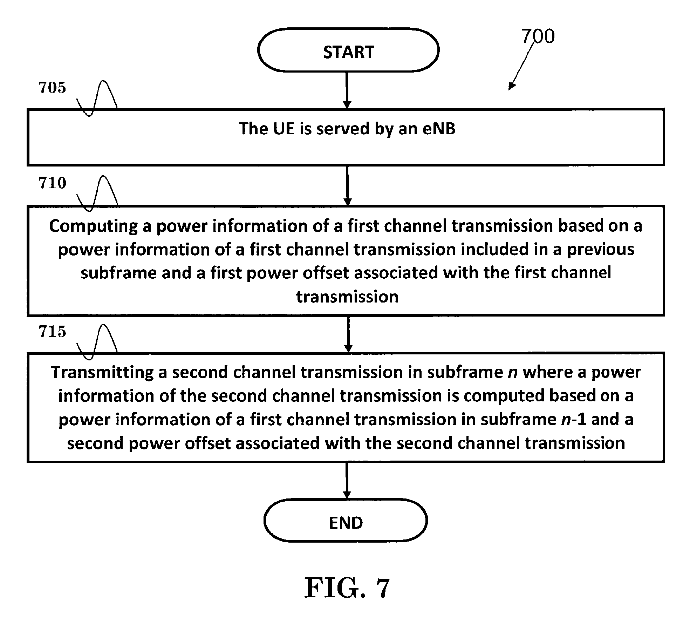

FIG. 7 is a flow chart 700 in accordance with one exemplary embodiment according to the invention from the perspective of a UE. In step 705, the UE is served by an eNB. In step 710, a power information of a first channel transmission is computed based on a power information of a first channel transmission included in a previous subframe and a first power offset associated with the first channel transmission. In step 715, the UE transmits a second channel transmission in subframe $n$ where a power information of the second channel transmission is computed based on a power information of a first channel transmission in subframe $n$-1 and a second power offset associated with the second channel transmission in subframe n.

Furthermore, the second channel transmission is D2D transmission. the second power offset is the TPC value signalled for D2D transmission.

Preferably, the first channel transmission is a PUSCH transmission, the power information of the first channel transmission is the power control adjustment state of the PUSCH transmission, and the first power offset is the TPC (Transmit Power Control) value for the PUSCH transmission. Furthermore, resources used in D2D can be time division or frequency division with resources used in PUSCH.

Alternatively, preferably, the first channel transmission is a PUCCH transmission, the power information of the first channel transmission is the power control adjustment state of the PUCCH transmission, and the first power offset is the TPC value for the PUCCH transmission. Furthermore, resources used in D2D can be time division or frequency division with resources used in PUCCH.

Preferably, the power information of a second channel transmission in subframe $n+j, j \geqq 1$, is based on a power information of a second channel transmission in subframe $n+j$-1 and an associated second power offset, which is the power offset of the second channel transmission in subframe $n+j$. Furthermore, preferably, the associated second power offset is zero for a subframe $n+j, j \geqq 0$, where no associated TPC value is decoded for the second channel transmission, or where a DRX (Discontinuous Reception) occurs or the subframe $n+j$ is not an uplink subframe in TDD (Time Division Duplexing). In addition, the second channel transmission in subframe $n+j, j \geqq 1$, could be in a same D2D period as a second channel transmission in subframe $n$. Furthermore, the D2D period could include a SA (Scheduling Assignment) and a corresponding data transmission.

Alternatively, preferably, the power information of a second channel transmission in subframe $n+j, j \geqq 1$ is based on a power information of a first channel transmission in subframe $n+j$-1 and an associated second power offset, which is the power offset of the second channel transmission in subframe $n+j$. Furthermore, preferably, the associated second power offset is zero for a subframe $n+j, j \geqq 0$, where no associated TPC value is decoded for the second channel transmission, or where a DRX occurs or the subframe $n+j$ is not an uplink subframe in TDD. In addition, the second channel transmission in subframe $n+j, j \geqq 1$, could be in a same D2D period as a second channel transmission in subframe $n$. Furthermore, the D2D period could include a SA (Scheduling Assignment) and a corresponding data transmission.

Referring back to FIGS. 3 and 4, the device 300 includes a program code 312 stored in memory 310 of a network. In one embodiment, the CPU 308 could execute program code 312 (i) to compute a power information of a first channel transmission based on a power information of a first channel transmission included in a previous subframe and a first power offset associated with the first channel transmission, and (ii) to transmit a second channel transmission in subframe $n$ where a power information of the second channel transmission is computed based on a power information of a first channel transmission in subframe $n$-1 and a second power offset associated with the second channel transmission.

In addition, the CPU 308 could execute the program code 312 to perform all of the above-described actions and steps or others described herein, in particular those described in paragraphs [0049] to [0054] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method for supporting the device to device, in the following also referred to as D2D, communication device, wherein a User Equipment, in the following also referred to as UE, is capable of D2D communication, comprising:

   the UE is served by an evolved Node B, in the following also referred to as eNB, (705);
   computing a power information of a first channel transmission based on a power information of a first channel transmission included in a previous subframe and a first power offset associated with the first channel transmission (710); and
   transmitting a second channel transmission in subframe $n$ where a power information of the second channel transmission is computed based on a power information of a first channel transmission in subframe $n$-1 and a second power offset associated with the second channel transmission (715).

2. The method of claim 1, wherein the second channel transmission is D2D transmission, and the second power offset is the TPC value signaled for D2D transmission.

3. The method of claim 1 or 2, wherein the first channel transmission is a Physical Uplink Share Channel, in the following also referred to as PUSCH, transmission, the power information of the first channel transmission is the power control adjustment state of the PUSCH transmission, and the first power offset is the Transmit Power Control, in the following also referred to as TPC, value for the PUSCH transmission.

4. The method of claim 3, wherein resources used in D2D are time division or frequency division with resources used in PUSCH.

5. The method of claim 1 or 2, wherein the first channel transmission is a Physical Uplink Control Channel, in the following also referred to as PUCCH, transmission, the power information of the first channel transmission is the power control adjustment state of the PUCCH transmission, and the first power offset is the Transmit Power Control, in the following also referred to as TPC, value for the PUCCH transmission.

6. The method of claim 5, wherein resources used in D2D are time division or frequency division with resources used in PUCCH.

7. The method of any one of claims 1 to 6, wherein the power information of a second channel transmission in subframe $n$+$j$, $j \geq 1$, is based on a power information of a second channel transmission in subframe $n$+$j$-1 and an associated second power offset.

8. The method of any one of claims 1 to 6, wherein the power information of a second channel transmission in subframe $n$+$j$, $j \geq 1$ is based on a power information of a first channel transmission in subframe $n$+$j$-1 and an associated second power offset.

9. The method of claim 7 or 8, wherein the second channel transmission in subframe $n$+$j$, $j \geq 1$, is in a same D2D period as a second channel transmission in subframe $n$.

10. The method of claim 9, wherein the D2D period includes a Scheduling Assignment, in the following also referred to as SA, and a corresponding data transmission.

11. A communication device for supporting the device to device, in the following also referred to as D2D, communication device, wherein a User Equipment, in the following also referred to as UE, is capable of D2D communication and is served by an evolved Node B, in the following also referred to as eNB, the communication device comprising:

    a control circuit (306);
    a processor (308) installed in the control circuit (306);
    a memory (310) installed in the control circuit (306) and operatively coupled to the processor (308);
    wherein the processor (308) is configured to execute a program code (312) stored in the memory (310) to perform the method steps as defined in any one of the preceding claims.

**FIG. 1**

**FIG. 2**

FIG. 3

PROGRAM CODE *312*

APPLICATION LAYER *400*

LAYER 3 *402*

LAYER 2 *404*

LAYER 1 *406*

FIG. 4

(a) eNB receiver side

(b) D2D receiver side

FIG. 5 (PRIOR ART)

RB=0-2

12 RBs

RB=47-49

|  | PUCCH | PUCCH | PUCCH |
|---|---|---|---|
|  |  |  |  |
|  | Guard Band | Guard Band | Guard Band |
|  | D2D | D2D | D2D |
|  |  |  |  |
|  |  |  |  |
|  | PUCCH | PUCCH | PUCCH |

SF 9  SF 0  SF 1

## FIG. 6 (PRIOR ART)

705 /\

START                          700

The UE is served by an eNB

710 /\

Computing a power information of a first channel transmission based on a power information of a first channel transmission included in a previous subframe and a first power offset associated with the first channel transmission

715 /\

Transmitting a second channel transmission in subframe $n$ where a power information of the second channel transmission is computed based on a power information of a first channel transmission in subframe $n$-1 and a second power offset associated with the second channel transmission

END

FIG. 7

Europäisches
Patentamt

European
Patent Office

Office européen
des brevets

**EUROPEAN SEARCH REPORT**

Application Number

EP 15 17 6153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/324182 A1 (DENG TAO [US] ET AL) 5 December 2013 (2013-12-05) | 1,2,11 | INV. H04W52/38 |
| A | * paragraph [0056] * <br> * paragraph [0062] - paragraph [0069] * <br> * paragraph [0128] - paragraph [0136] * <br> * paragraph [0144] - paragraph [0148] * <br> * paragraph [0150] - paragraph [0151] * | 3-10 | |
| X | WO 2014/007581 A1 (LG ELECTRONICS INC) 9 January 2014 (2014-01-09) | 1,11 | |
| A | * paragraph [0078] - paragraph [0081] * <br> * paragraph [0166] - paragraph [0168] * <br> & US 2015/124737 A1 (LEE SEUNGMIN [KR] ET AL) 7 May 2015 (2015-05-07) <br> * paragraph [0076] - paragraph [0078] * <br> * paragraph [0160] - paragraph [0162] * | 2-10 | |
| A | LG ELECTRONICS: "Operational procedure in Mode 1 for D2D communication", 3GPP DRAFT; R1-142150 MODE 1 FOR COMMUNICATION_LG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789270, Retrieved from the Internet: URL:http://www.3gpp.org/ftp/Meetings_3GPP_SYNC/RAN1/RAN1/Docs/ [retrieved on 2014-05-18] * section 3; table 1 * | 1-11 | TECHNICAL FIELDS SEARCHED (IPC) H04W |

-/--

The present search report has been drawn up for all claims

| Place of search | Date of completion of the search | Examiner |
|---|---|---|
| The Hague | 2 September 2015 | Riposati, Benedetto |

EPO FORM 1503 03.82 (P04C01)

Europäisches
Patentamt

European
Patent Office

Office européen
des brevets

**EUROPEAN SEARCH REPORT**

Application Number

EP 15 17 6153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/325625 A1 (HUGL KLAUS [FI] ET AL) 31 December 2009 (2009-12-31) * paragraph [0060] - paragraph [0062] * * paragraph [0046] - paragraph [0051] * ----- | 1-11 | |

TECHNICAL FIELDS
SEARCHED        (IPC)

The present search report has been drawn up for all claims

| Place of search | Date of completion of the search | Examiner |
|---|---|---|
| The Hague | 2 September 2015 | Riposati, Benedetto |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 15 17 6153

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2015

| Patent document cited in search report | | Publication date | Patent family member(s) | | Publication date |
|---|---|---|---|---|---|
| US 2013324182 | A1 | 05-12-2013 | CN | 104350790 A | 11-02-2015 |
| | | | EP | 2856812 A2 | 08-04-2015 |
| | | | JP | 2015519028 A | 06-07-2015 |
| | | | KR | 20150027176 A | 11-03-2015 |
| | | | TW | 201406180 A | 01-02-2014 |
| | | | US | 2013324182 A1 | 05-12-2013 |
| | | | WO | 2013181444 A2 | 05-12-2013 |
| WO 2014007581 | A1 | 09-01-2014 | US | 2015124737 A1 | 07-05-2015 |
| | | | WO | 2014007581 A1 | 09-01-2014 |
| US 2009325625 | A1 | 31-12-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62023403 A

### Non-patent literature cited in the description

- Physical layer procedures. *TS 36.213 V11.2.0*
- WAN protection by configurable D2D transmission power control. *R1-142454*
- Power control for D2D signals. *R1-141928*
- Discussion on guard period in D2D PUSCH. *R1-141301*
- Evaluation of D2D and cellular coexistence. *R1-142339*
- Multiplexing and channel coding. *TS 36.212 V11.2.0*
- Physical Channels and Modulation. *TS 36.211 V11.2.0*
- Medium Access Control (MAC) protocol specification. *TS 36.321 V11.2.0*